# EUROPEAN PATENT APPLICATION

(11) **EP 4 776 685 A1**
(43) Date of publication of application: **15.07.2026**
(21) Application number: 24938109.6
(22) Date of filing: 14.11.2024
(51) Int. Cl.: H04W 28/04

(54) **DATA TRANSMISSION METHOD, WIRELESS TRANSMITTING DEVICE, WIRELESS RECEIVING DEVICE, AND SYSTEM**

(71) Applicant: Shenzhen Hollyland Technology Co., Ltd., Shenzhen, Guangdong 518108 (CN)
(72) Inventor: LIU, Dezhi, Shenzhen, Guangdong 518108 (CN); YANG, Li, Shenzhen, Guangdong 518108 (CN); QU, Baoqing, Shenzhen, Guangdong 518108 (CN)
(74) Representative: Grünecker Patent- und Rechtsanwälte PartG mbB
(86) International application number: PCT/CN2024/131985
(87) International publication number: WO 2026/102649

(57) **Abstract**

The present disclosure provides a data transmission method, a wireless sending device, a wireless receiving device, a wireless transmission system, a computer program product, and a computer readable storage medium. The wireless sending end sends the data packet and the corresponding error correction check packet to the wireless receiving end each time, the wireless sending end may predict, based on packet loss information fed back by the wireless receiving end in the previous time, the number of lost packets in a current transmission process, and then determine, based on the number of the lost packets, the number of the error correction check packets to be sent to the wireless receiving end. By dynamically adjusting the number of the to-be-sent error correction check packets in the current data transmission process based on the real-time packet loss information, the appropriate number of error correction check packets may be sent during each data transmission, which can not only ensure fast recovery of the lost data packets, reducing the delay, but also avoid the waste of network resources.

## Description

### TECHNICAL FIELD

The present disclosure relates to a field of wireless transmission technologies, and specifically to a data transmission method, a wireless sending device, a wireless receiving device, a wireless transmission system, a computer program product, and a computer readable storage medium.

### BACKGROUND

In a wireless transmission scenario, because a transmission signal is subject to an external interference, a bit error rate increases, such that the transmission signal cannot be parsed, and therefore, there is a packet loss phenomenon in a wireless transmission process. Because the packet loss may cause a data loss and affect the subsequent use, the wireless receiving end needs to recover the lost data packet in various manners. In a scenario in which there is the packet loss phenomenon, the wireless receiving end may request, based on a retransmission technology, the wireless sending end to resend a lost data packet, but there is a certain delay in the retransmission, which cannot ensure a real-time performance of data transmission. Certainly, some error correction technologies may also be used to recover the lost data packet. For example, when the wireless sending end sends the data packet to the wireless receiving end, the wireless sending end simultaneously sends an error correction check packet used for recovering the data packet, and when there is a lost data packet, the wireless receiving end may directly recover the lost data packet by the error correction check packet. Compared with the retransmission manner, this manner may reduce the delay.

In current technologies, the number of error correction check packets sent by the wireless sending end each time is fixed, and if the number of the sent error correction check packets is always greater than the number of to-be-recovered lost data packets, excessive wireless bandwidth may be occupied, resulting in a waste of network resources. If the number of the sent error correction check packets is always less than the number of the to-be-recovered lost data packets, the wireless receiving end still needs to request the wireless sending end to retransmit data, such that the problem of the delay still exists. Therefore, it is necessary to provide a data transmission solution that both can reduce the delay of the data transmission and avoid the waste of the bandwidth resources.

### SUMMARY

**In** view of this, the present disclosure provides a data transmission method, a wireless sending device, a wireless receiving device, a wireless transmission system, a computer program product, and a computer readable storage medium.

According to a first aspect of the present disclosure, a data transmission method is provided. The method is performed by a wireless sending end which is communicatively connected to one or more wireless receiving ends, and includes:
obtaining a plurality of to-be-sent data packets, and performing an encoding process on the plurality of data packets to obtain a plurality of error correction check packets, where the plurality of error correction check packets are used for recovering the plurality of data packets;
selecting M error correction check packets from the plurality of error correction check packets, where M is a positive integer and is determined based on packet loss information returned by the one or more wireless receiving ends in a previous time; and
sending the plurality of data packets and the M error correction check packets to the one or more wireless receiving ends, such that the one or more wireless receiving ends are caused to determine, based on received data packets, packet loss information for the plurality of data packets in a transmission process, return the determined packet loss information to the wireless sending end, and recover, in a case of determining that there is a packet loss phenomenon, the plurality of data packets based on the received data packets and received error correction check packets.

According to a second aspect of the present disclosure, a data transmission method is provided. The data transmission method is performed by a wireless receiving end which is communicatively connected to a wireless sending end, and includes:
receiving a plurality of data packets and a plurality of error correction check packets sent by the wireless sending end;
determining packet loss information in a current data transmission process based on the received data packets, and returning the determined packet loss information to the wireless sending end, so that the wireless sending end determines, based on the packet loss information, the number of to-be-sent error correction check packets in a next data transmission process; and
recovering, in a case of determining that there is a packet loss phenomenon, the plurality of data packets sent by the wireless sending end based on the received data packets and the received error correction check packets.

According to a third aspect of the present disclosure, a wireless sending device is provided. The wireless sending device may implement the data transmission method mentioned in the first aspect.

According to a fourth aspect of the present disclosure, a wireless receiving device is provided. The wireless receiving device may implement the data transmission method mentioned in the second aspect.

According to a fifth aspect of the present disclosure, a wireless transmission system is provided. The wireless transmission system includes the wireless sending device mentioned in the third aspect and one or more wireless receiving devices mentioned in the fourth aspect.

According to a sixth aspect of the present disclosure, a computer program product is provided. The computer program product includes a computer program, and the computer program, when being executed, implements the method mentioned in the first aspect and/or the second aspect.

According to a seventh aspect of the present disclosure, a computer storage medium is provided. The computer storage medium stores computer instructions, and the computer instructions, when being executed, implements the method mentioned in the first aspect and/or the second aspect.

By applying the solutions provided by the present disclosure, the wireless sending end sends the data packet and the corresponding error correction check packet to the wireless receiving end each time, the wireless sending end may predict, based on packet loss information fed back by the wireless receiving end in the previous time, the number of lost packets in a current transmission process, and then determine, based on the number of the lost packets, the number of the error correction check packets to be sent to the wireless receiving end. By dynamically adjusting the number of the to-be-sent error correction check packets in the current data transmission process based on the real-time packet loss information, the appropriate number of error correction check packets may be sent during each data transmission, which can not only ensure fast recovery of the lost data packets, reducing the delay, but also avoid the waste of network resources.

It should be understood that the above general description and the detailed description in the following text are only exemplary and explanatory, and cannot limit the present disclosure.

### BRIEF DESCRIPTION OF DRAWINGS

In order to more clearly describe the technical solutions in embodiments of the present disclosure, accompanying drawings that need to be used in embodiments will be briefly described below. Obviously, accompanying drawings described below are for only some of embodiments of the present disclosure; those skilled in the art may also obtain other accompanying drawings based on these accompanying drawings without any creative efforts.
FIG. 1 is a schematic diagram of data exchange between a wireless sending end and a wireless receiving end according to an embodiment of the present disclosure.
FIG. 2 is a schematic diagram of data transmission between a wireless sending end and a wireless receiving end through a broadcast channel and a unicast channel according to an embodiment of the present disclosure.
FIG. 3 is a schematic diagram of data transmission between a wireless sending end and a wireless receiving end through a broadcast channel and a unicast channel according to an embodiment of the present disclosure.
FIG. 4 is a schematic diagram of data transmission between a wireless sending end and a plurality of wireless receiving ends according to an embodiment of the present disclosure.

### DETAILED DESCRIPTION

The technical solutions in the embodiments of the present disclosure will be described clearly and completely below in combination with the accompanying drawings in the embodiments of the present disclosure. Obviously, the described embodiments are merely a part of and not all of the embodiments of the present disclosure. Based on the embodiments of the present disclosure, all other embodiments obtained by those skilled in the art without creative efforts fall within the scope of protection of the present disclosure.

In a wireless transmission scenario, because a transmission signal is subject to an external interference, a bit error rate increases, such that the transmission signal cannot be parsed, and therefore, there is a packet loss phenomenon in a wireless transmission process. Because the packet loss may cause data loss and affect the subsequent use, the wireless receiving end needs to recover the lost data packet in various manners. For example, taking wireless transmission of video data as an example, if there is a packet loss in a transmission process, a phenomenon of stuttering or screen tearing may occur during video playing, which cannot ensure an effect of the video playing.

To resolve the problem of the packet loss, the wireless receiving end may request, based on a retransmission technology, the wireless sending end to resend the lost data packet, to implement data recovery. However, as the retransmission introduces a certain delay, in some scenarios that require high real-time data transmission (such as a video transmission scenario), the transmission effect may not be ensured (for example, occurring problems, such as video stuttering, screen tearing, etc.).

Certainly, to quickly recover the lost data packet, the lost data packet may also be recovered based on an error correction technology, such as FEC (forward error correction), etc. For example, when the wireless sending end sends the data packet to the wireless receiving end, the wireless sending end may also simultaneously send an error correction check packet used for recovering the data packet, that is, when there is a lost data packet, the wireless receiving end may recover the lost data packet by the error correction check packet. Compared with a retransmission manner, this manner may reduce the delay.

Taking the FEC technology as an example, the FEC technology may recover data contained in damaged, discarded, or lost data packets by encoding redundant information, where the redundant information may be used by the wireless receiving end to reconstruct the lost data, so the FEC technology may provide faster data recovery than the transmission, which is particularly suitable for streaming media transmission. Specifically, the FEC technology may perform precoding according to m to-be-sent data packets, to obtain n error correction check packets, where m and n are both positive integers. The m data packets may be restored by using any m pieces of data in the m+n data packets and error correction check packets. Therefore, if there are any lost packets less than or equal to n, they can still be restored through the remaining data.

In current technologies, the wireless sending end usually sends m data packets and n error correction check packets to the wireless receiving end simultaneously. When the m data packets are partially lost, the complete m data packets may be restored based on the n check packets, to resolve the problem of the packet loss. However, with the change of the network environment, the number of data packets lost in each transmission process is usually different. For example, the number of the lost data packets may be greater than n or less than n. If the number of the lost data packets is always less than n, that is, the number of the sent error correction check packets is always greater than the number of the to-be-recovered lost data packets, excessive wireless bandwidth may be occupied undoubtedly, resulting in the waste of network resources. If the number of the lost data packet is always greater than n, that is, the number of the sent error correction check packets is always less than the number of the to-be-recovered lost data packets, this may cause that the wireless receiving end needs to request the wireless sending end to retransmit the data each time, resulting in the delay of the data transmission.

Considering that the number of lost packets in the wireless transmission process is usually affected by the current network environment, the network environment changes dynamically, and therefore the number of the lost packets also changes dynamically. In addition, the quality of the network environment may usually be evaluated through the packet loss situation in the transmission process. Based on this, in this embodiment of the present disclosure, the wireless sending end sends the data packet and the corresponding error correction check packet to the wireless receiving end each time, the wireless sending end may predict, based on packet loss information fed back by the wireless receiving end in the previous time, the number of lost packets in a current transmission process, and then determine, based on the number of the lost packets, the number of the error correction check packets to be sent to the wireless receiving end. By dynamically adjusting the number of the to-be-sent error correction check packets in the current data transmission process based on the real-time packet loss information, the appropriate number of error correction check packets may be sent during each data transmission, which can not only ensure fast recovery of the lost data packets, reducing the delay, but also avoid the waste of resources.

The wireless sending end in the present disclosure may be communicatively connected to one or more wireless receiving ends, and the wireless sending end may communicate with the one or more wireless receiving ends based on various wireless protocols, such as WiFi, Bluetooth, or a customized private protocol, which is not limited in this embodiment of the present disclosure.

The data transmitted between the wireless sending end and the wireless receiving end may be various types of data, such as video data, audio data, etc., which is not limited in this embodiment of the present disclosure.

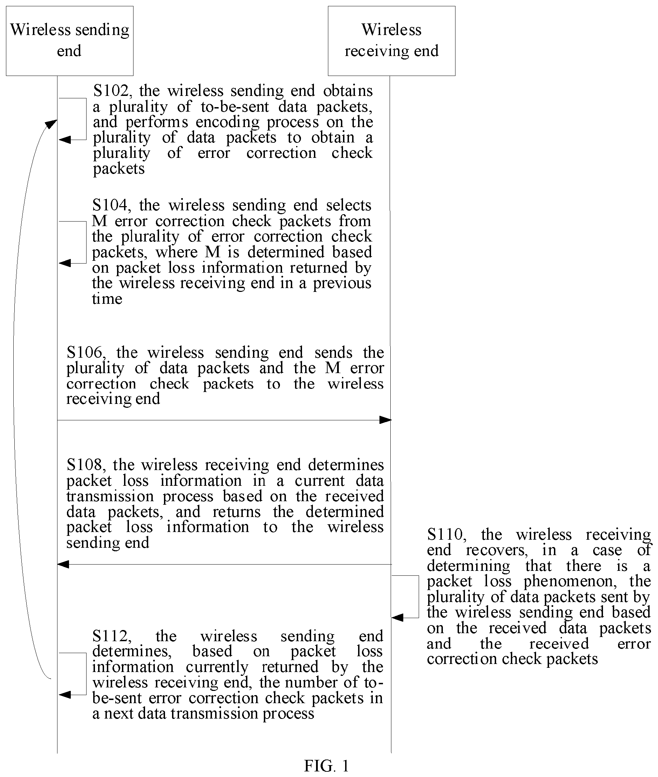

As shown in FIG. 1, FIG. 1 is a schematic diagram of data exchange between a wireless sending end and a wireless receiving end according to an embodiment of the present disclosure.

At step S102, the wireless sending end obtains a plurality of to-be-sent data packets, and performs an encoding process on the plurality of data packets to obtain a plurality of error correction check packets, where the plurality of error correction check packets are used for recovering the plurality of data packets.

In the step S102, for to-be-sent original data, the wireless sending end may unpack the original data to obtain one or more groups, where each group may include a plurality of data packets, and then perform data sending in units of groups, to sequentially send data packets of each group. For example, it is assumed that original data is unpacked into 64 data packets, and 8 data packets are grouped into one group, that is, 8 groups may be obtained, and the 8 groups may be sent to the wireless receiving end in 8 times.

After obtaining a plurality of to-be-sent data packets in a current group, the wireless sending end may perform an encoding process on the plurality of data packets to obtain a plurality of corresponding error correction check packets, where the plurality of error correction check packets may be used for recovering the plurality of data packets. For example, the FEC encoding process may be performed on the plurality of data packets to obtain a plurality of error correction check packets. The number of error correction check packets obtained through the encoding may be consistent with or inconsistent with the number of data packets, which may be specifically configured based on an actual requirement. For example, it is assumed that 8 data packets are grouped into one group, for 8 data packets in each group, 8 error correction check packets may be obtained through encoding, and the 8 error correction check packets may be used for recovering the 8 data packets. For example, if 3 data packets are lost, the lost 3 data packets may be recovered through any 3 of the 8 error correction check packets.

At step S104, the wireless sending end selects M error correction check packets from the plurality of error correction check packets, where M is a positive integer and is determined based on packet loss information returned by the one or more wireless receiving ends in a previous time.

In the step S104, after the wireless sending end performs the encoding to obtain a plurality of error correction check packets, the wireless sending end may randomly select M error correction check packets from the plurality of error correction check packets as to-be-sent error correction check packets in the current data transmission. To ensure that the number of the sent error correction check packets matches the number of possible lost data packets in the transmission process as much as possible (where the matching means that the number of the error correction check packets is the same as the number of the possible lost data packets, or is slightly greater than the number of the possible lost data packets, so that retransmission may be avoided and too much wastes of network resources cannot be caused), the wireless sending end may predict, based on the packet loss information returned by the wireless receiving end in the previous time, the number of possible lost packets in the current transmission process, and further determine the number M of to-be-sent error correction check packets in the current data transmission.

For example, each group includes 8 data packets and 8 error correction check packets. The number of possible lost data packets in a process of sending the 8 data packets may be predicted based on the packet loss information returned by the wireless receiving end, where it is assumed that the number is 3, and 3 error correction check packets may be randomly selected from the 8 error correction check packets for sending.

The packet loss information may be various information indicating a packet loss situation in a previous data transmission process. For example, the packet loss information may be the number of the lost packets, a packet loss rate per unit time, a packet loss time, a packet loss location, etc., and may be specifically flexibly configured based on an actual requirement.

At step S106, the wireless sending end sends the plurality of data packets and the M error correction check packets to the one or more wireless receiving ends.

In the step S106, the wireless sending end may send the plurality of data packets and the M error correction check packets to the one or more wireless receiving ends.

At step S108, the wireless receiving end receives the data packets and the error correction check packets sent by the wireless sending end, determines packet loss information in a current data transmission process based on the received data packets, and returns the determined packet loss information to the wireless sending end.

At step S108, the wireless receiving end may receive the data packets and the error correction check packets sent by the wireless sending end, and determine packet loss information in a current data transmission process based on the received data packets. For example, the wireless receiving end may determine the number of the lost packets, the packet loss rate, etc., in the current data transmission process based on the number of the received data packets, and then return the determined packet loss information to the wireless sending end.

At step S110, the wireless receiving end recovers, in a case of determining that there is a packet loss phenomenon, the plurality of data packets sent by the wireless sending end based on the received data packets and the received error correction check packets.

After receiving the data packets and the error correction check packets, the wireless receiving end may determine whether there is a packet loss phenomenon, and if there is no packet loss phenomenon, the wireless receiving end may directly pack the received data packets and parse out the original data. If there is a packet loss phenomenon, the wireless receiving end recovers a plurality of data packets sent by the wireless sending end by using the received error correction check packets and data packets, and then performs the packing.

At step S112, the wireless sending end determines, based on packet loss information returned by the wireless receiving end in the current data transmission process, the number of to-be-sent error correction check packets in a next data transmission process.

In the step S112, the wireless sending end receives the packet loss information returned by the wireless receiving end in the current data transmission process, and determining, based on the packet loss information, the number of to-be-sent error correction check packets in the data transmission process immediately after the current data transmission process. The wireless sending end may continuously determine the number of to-be-sent error correction check packets in the current data transmission process based on the packet loss information returned by the wireless receiving end in the data transmission process immediately before the current data transmission process, so that the number of error correction check packets may be dynamically adjusted, and the number of the error correction check packets matches the number of the lost packets in the current transmission process as much as possible.

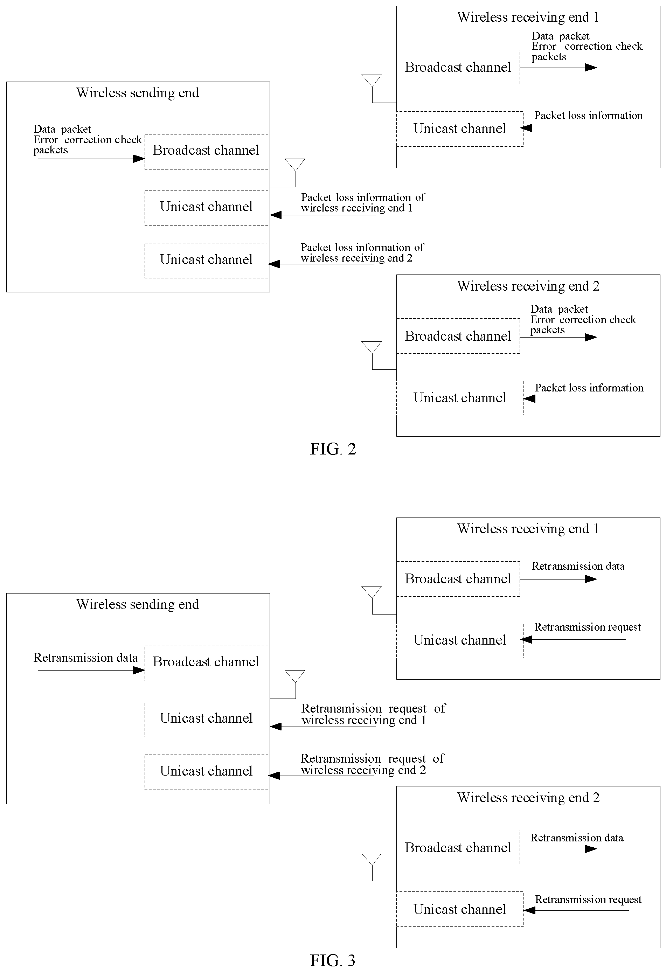

In some embodiments, there may be a plurality of wireless receiving ends in the wireless transmission system, as shown in FIG. 2, in a scenario in which the wireless receiving ends include at least two wireless receiving ends (taking two wireless receiving ends as an example in FIG. 2), the wireless sending end may establish a broadcast channel, and send the plurality of data packets and the M error correction check packets to the at least two wireless receiving ends (for example, the wireless receiving end 1 and the wireless receiving end 2 in the figure) through the broadcast channel. Considering that the packet loss situation of each wireless receiving end is different, the wireless sending end may also establish at least two unicast channels, and each unicast channel is used for receiving the packet loss information returned by one wireless receiving end.

Similarly, each wireless receiving end may also separately establish a broadcast channel and a unicast channel, receive, through the broadcast channel, the plurality of data packets and M error correction check packets broadcast by the wireless sending end, and send the packet loss information to the wireless sending end through the unicast channel.

Since the number of error correction check packets sent each time is predicted based on the packet loss information fed back by the wireless receiving end in the previous time, it cannot be ensured that the packet loss data can be recovered through the sent error correction check packets each time. Therefore, after the wireless receiving end receives the data packets and the error correction check packets sent by the wireless sending end, if determining that the plurality of data packets cannot be recovered based on the received data packets and the received error correction check packets, the wireless receiving end may send a retransmission request to the wireless sending end, to request the wireless sending end to resend the data. In a current technology, in a scenario in which one wireless sending end simultaneously transmits data to at least two wireless receiving ends, the wireless sending end usually performs wireless transmission in a broadcast + unicast manner, for example, sending one piece of data in a broadcast manner, each wireless receiving end sends a retransmission request based on a packet loss situation of the wireless receiving end, and because data packets lost by each wireless receiving end may be different, the wireless sending end needs to return the retransmission data to each wireless receiving end in a unicast manner one-to-one. For example, it is assumed that there are 4 wireless receiving ends, if data packets lost by the 4 wireless receiving ends all include a data packet 1, the wireless sending end needs to resend the data packet 1 to the 4 wireless receiving ends respectively, that is, the same data needs to be repeatedly sent for 4 times, which occupies a lot of bandwidth resources.

Considering that even if data packets lost by different wireless receiving ends are different, the recovery may be performed through the same error correction check packets, and therefore, when a plurality of wireless receiving ends all request the retransmission, a copy of error correction check packets capable of enabling the plurality of wireless receiving ends to realize data recovery may be broadcast, so that the same data may be prevented from being repeatedly sent, which saves the bandwidth. In some embodiments, when there are at least two wireless receiving ends, after the wireless sending end sends the plurality of data packets and the M error correction check packets to the at least two wireless receiving ends, the at least two wireless receiving ends may determine, based on data packets received by the at least two wireless receiving ends, whether there is a packet loss phenomenon, and if there is a packet loss phenomenon, may further determine whether packet loss data can be recovered based on the received error correction check packets (that is, whether the number of the error correction check packets is equal to or greater than the number of the lost packets), and if yes, directly recover the packet loss data by using the received error correction check packets, and perform the packing. If the packet loss data cannot be recovered by using the received error correction check packets, the wireless receiving ends may return retransmission requests to the wireless sending end, where each retransmission request may carry the number of to-be-retransmitted error correction check packets. Considering that the number of error correction check packets requested to be retransmitted by each wireless receiving end is different, as shown in FIG. 3, each wireless receiving end may send the retransmission request through the unicast channel.

Certainly, the wireless receiving end may also carry the number of lost packets in the current data transmission process in the retransmission request, and the wireless sending end determines the number of to-be-retransmitted error correction check packets based on the number of the lost packets and the number of the sent error correction check packets.

The wireless sending end may receive retransmission requests returned by one or more of the at least two wireless sending ends, determine a maximum number N from numbers carried in the received retransmission requests, then select N error correction check packets from other error correction check packets than the sent M error correction check packets in the plurality of error correction check packets as retransmission data, and broadcast the retransmission data through a broadcast channel. As shown in FIG. 3, the wireless sending end may send the retransmission data to the wireless receiving end 1 and the wireless receiving end 2 through the broadcast channel, so that only one copy of retransmission data needs to be sent, and each of the plurality of wireless receiving ends may recover the packet loss data based on the retransmission data, thereby saving bandwidth resources.

For example, it is assumed that the wireless sending end currently needs to send 8 data packets, the encoding is performed based on the 8 data packets to obtain 8 error correction check packets, and it is determined, based on the packet loss information returned by the wireless receiving end in the previous time, that the number of to-be-sent error correction check packets is 3, that is, 3 error correction check packets may be randomly selected from the 8 error correction check packets for sending. The wireless sending end sends the 8 data packets and the 3 error correction check packets to the 2 wireless receiving ends (the wireless receiving end 1 and the wireless receiving end 2) in a broadcast manner. The wireless receiving end 1 and the wireless receiving end 2 may determine whether to retransmit based on the received data packets and the received error correction check packets. For example, it is assumed that the wireless receiving end 1 loses 4 data packets, the wireless receiving end 1 may request the wireless sending end to retransmit one error correction check packet, and it is assumed that the wireless receiving end 2 loses 5 data packets, the wireless receiving end 2 may request the wireless sending end to retransmit 2 error correction check packets. After receiving the two retransmission requests, the wireless sending end determines that the maximum number of to-be-retransmitted error correction check packets is 2, so 2 error correction check packets may be randomly selected from the remaining 5 error correction check packets again and broadcast. After receiving the retransmitted two error correction check packets, the wireless receiving end 1 may select one error correction check packet from the two error correction check packets for recovering the packet loss data, and the wireless receiving end 2 may recover the packet loss data based on the retransmitted two error correction check packets. In some embodiments, after sending the retransmission request to the wireless sending end, the wireless receiving end may receive the error correction check packets retransmitted by the wireless sending end, and packs the retransmitted error correction check packets. To quickly recover the packet loss data by using the retransmitted error correction check packets, and reduce a delay, a packing priority of the retransmitted error correction check packets is higher than a packing priority of other data packet, that is, the wireless receiving end preferentially pack the retransmitted error correction check packets.

In some embodiments, the packet loss information may be a packet loss rate per unit time. The wireless sending end may determine a maximum packet loss rate from packet loss rates per unit time which are returned by the at least two wireless receiving ends in the previous time, and determine the number M of to-be-sent error correction check packets in this time based on the number of the plurality of to-be-sent data packets and the maximum packet loss rate. Because the wireless sending end broadcasts the error correction check packets to the at least two wireless receiving ends, that is, the at least two wireless receiving ends receive the same error correction check packets, to ensure that each wireless receiving end can recover the packet loss data based on the received error correction check packets, the number M of to-be-sent error correction check packets may be determined based on the maximum packet loss rate returned by the at least two wireless receiving ends.

For example, a maximum packet loss number in the current transmission process may be predicted based on the number of to-be-sent error correction check packets and the maximum packet loss rate. In some scenarios, the number M of to-be-sent error correction check packets may be directly configured as the predicted maximum packet loss number. Of course, in some scenarios, in order to improve an anti-interference performance, the number M of to-be-sent error correction check packets may also be configured to be larger than the predicted maximum packet loss number, so that it may be ensured that the recovery of the packet loss data may be achieved only based on the error correction check packets, which avoids starting the retransmission process.

For example, it is assumed that there are two wireless receiving ends (the wireless receiving end 1 and the wireless receiving end 2), a packet loss rate per unit time (for example, 100 ms) returned by the wireless receiving end 1 in the previous time is 30%, a packet loss rate per unit time (for example, 100 ms) returned by the wireless receiving end in the previous time is 50%, and 8 data packets need to be sent currently, it may be predicted that the maximum packet loss number in the current data transmission process is 8 × 50% = 4. Therefore, the number of to-be-sent error correction check packets may be 4, or may be a value greater than 4, for example, 5 or 6.

In order to enable the wireless receiving end to receive the error correction check packets retransmitted by the wireless sending end fastest and recover the data, to reduce the delay, the wireless sending end may be configured with two sending queues, namely, a first sending queue and a second sending queue, where the first sending queue is used to send retransmission data (namely, to-be-retransmitted error correction check packets), and the second sending queue is used to send non-retransmission data, namely, normally transmitted data packets and error correction check packets. A priority of the first sending queue is higher than a priority of the second sending queue, and therefore it may be ensured that the retransmission data is preferentially sent to reduce the delay of the data transmission.

To further explain the data transmission method provided in this embodiment of the present disclosure, the data transmission method is described with reference to a specific embodiment below.

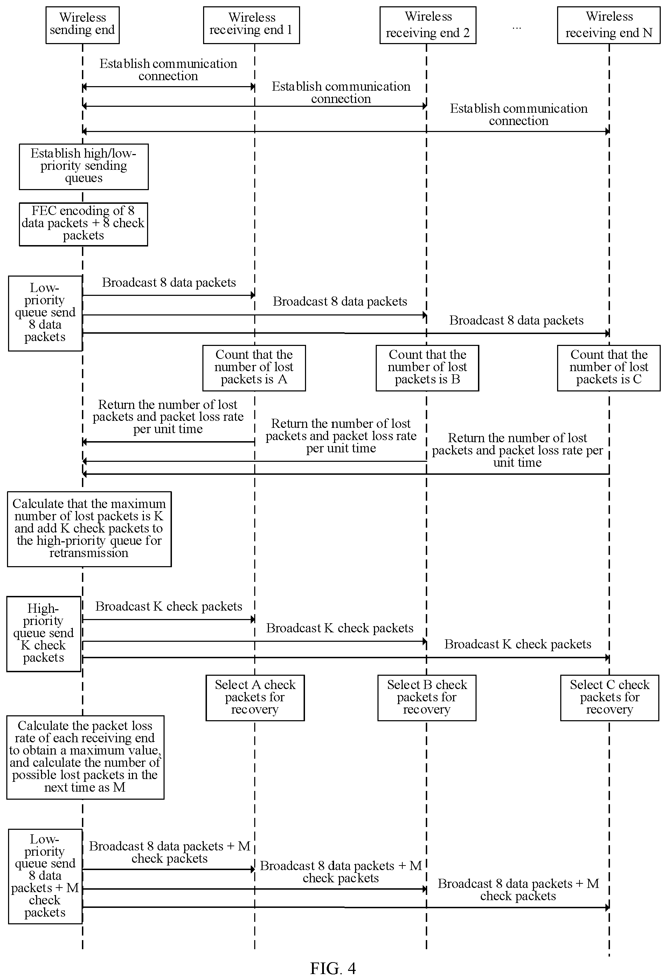

FIG. 4 shows a wireless transmission system. The wireless transmission system includes a wireless sending end and N wireless receiving ends (the wireless receiving ends 1~N), and the wireless sending end may transmit video data to the N wireless receiving ends. A specific procedure includes the following.
(1) The wireless sending end establishes a broadcast sending channel, and each wireless receiving end establishes a broadcast receiving channel.
(2) The wireless sending end establishes communication connections with the N wireless receiving ends respectively, and the communication connections are implemented through unicast, and are mainly configured to receive the number of lost packets and a packet loss rate per unit time counted by the wireless receiving end.
(3) The wireless sending end establishes a high-priority queue and a low-priority queue, where the high-priority queue is used for sending retransmission data, and the low-priority queue is used for sending normally transmitted data packets. Each time data is sent through the broadcast channel, if the high-priority queue has data, the data of the high-priority queue is preferentially sent, and then the data of the low-priority queue is sent.
(4) it is assumed that a frame of video data is 100 KB, and a broadcast channel MTU (maximum transmission unit) is 1500B, the video frame will be divided into 69 data packets. It is assumed that FEC encoding is performed by taking 8 data packets as a block, and each block is encoded into the same number of error correction check packets as the number of the original data packets, to obtain 8 groups of 8 original data packets + 8 error correction check packets and one group of 5 original data packets + 5 error correction check packets.
(5) The wireless sending end sends one block once, and sends 8 original data packets and 0 error correction check packets for the first time (to reduce a transmission delay caused by invalid error correction check packets). Then, the number of the error correction check packets is dynamically adjusted according to the packet loss rate, as shown in the following step (9).
(6) After receiving the data of the broadcast channel, each of the wireless receiving ends counts the number of lost packets and a packet loss rate per unit time of each wireless receiving end (for example, the number of lost packets of each of the wireless receiving end 1, the wireless receiving end 2, and the wireless receiving end N are A, B, and C respectively); and if there is no lost packet, performs video frame framing on the data packets; if error correction check packets carried in the block can meet a recovery situation, only counts the packet loss rate; or if the count number of the received packets is less than 8, calculates the number of lost packets of the current block and a packet loss rate per unit time. For example, it is assumed that after the current block is sent, a packet loss situation of each wireless receiving end is as follows: for the wireless receiving end 1, the number of lost packets of the current block is 2, and a packet loss rate per unit time 100 ms is 10%; for the wireless receiving end 2, the number of lost packets of the current block is 4, and a packet loss rate per unit time 100 ms is 30%; and then the packet loss information is reported to the sending end.
(7) The wireless sending end receives the packet loss information reported by the wireless receiving end and calculates the maximum number of error correction check packets that need to be retransmitted for the current block. For example, as shown in the figure, it is assumed that the maximum number of lost packets is K, that is, K error correction check packets need to be retransmitted. Any K unsent error correction check packets may be selected from the 8 error correction check packets, and the recovery may be performed normally based on the FEC decoding, to add the error correction check packets to the high-priority sending queue for retransmission sending. For example, taking the situation in the step (6) as an example, the wireless sending end counts that a maximum of 4 error correction check packets should be retransmitted.
(8) The wireless receiving end performs data recovery after receiving the retransmitted error correction check packets, and selects any required number of error correction check packets therefrom to perform the recovery; if the error correction check packets are sent together with the original data packets for the first time, the error correction check packets need to be staggered with the original data packets during retransmission, to avoid the inability to perform the recovery due to receiving repeated error correction check packets. For example, taking the situation in the step (6) as an example, the wireless receiving end 1 selects any 2 error correction check packets, other error correction check packets may be discarded, and the wireless receiving end 2 needs 4 error correction check packets.
(9) The wireless sending end counts the packet loss rates per unit time fed back by the wireless receiving ends, predicts the number of possible lost packets for sending the block in the next time, and configures the number of to-be-sent error correction check packets according to the maximum packet loss rate. For example, taking the situation in the step (6) as an example, the maximum packet loss rate per unit time is 30%, 3 (8 × 30% = 3) error correction check packets need to be sent together, and the sending situation of the sending end in the next time is 8 original data packets + 3 error correction check packets.
(10) Data sending may be performed by predicting the number of possible lost packets generated in the wireless environment according to the real-time packet loss rate, so that a delay caused by retransmission is replaced with a transmission delay for sending the number of initial data packets, thereby reducing a video transmission delay. If it is desired to have a stronger anti-interference and reduce the delay caused by retransmission, the anti-interference may be improved, according to the calculated error correction check packets and the added number of fixed error correction check packets when the initial data packets are transmitted. For example, taking the situation in the step (6) as an example, the maximum packet loss rate per unit time is 30%, 3 error correction check packets are calculated to be sent, if it is desired to send the initial data packets with improving the anti-interference performance by 25%, 2 error correction check packets are added again, the sending situation of the sending end in the next time is 8 original data packets + 5 error correction check packets.

The solutions of the above various embodiments may be freely combined to obtain a new solution without conflict, which will not be illustrated here one by one for the sake of text.

An embodiment of the present disclosure further provides a wireless sending device. The wireless sending device may implement functions of the wireless sending end described in the above embodiments.

An embodiment of the present disclosure further provides a wireless receiving device. The wireless receiving device may implement functions of the wireless receiving end described in the above embodiments.

An embodiment of the present disclosure further provides a wireless transmission system, including the wireless sending device and one or more wireless receiving devices. The wireless sending device may implement functions of the wireless sending end described in the above embodiments, and the wireless receiving device may implement functions of the wireless receiving end described in the above embodiments.

An embodiment of the present disclosure further provides a computer program product. The computer program product includes a computer program, and the computer program, when being executed, implements the methods described in the above embodiments.

An embodiment of the present disclosure further provides a computer storage medium. The computer storage medium stores computer instructions, and the computer instructions, when being executed, implement the methods described in the above embodiments.

Correspondingly, an embodiment of the present disclosure further provides a computer storage medium. The storage medium stores a program, and the program, when being executed by a processor, implements the method in any one of the above embodiments.

An embodiment of the present disclosure may take the form of a computer program product that is implemented on one or more storage mediums (including but not limited to a magnetic disk memory, a CD-ROM, an optical memory, etc.) containing program codes. The computer-usable storage medium includes permanent and non-permanent, removable and non-removable media, in which information storage may be implemented by any method or technology. The information may be computer-readable instructions, data structures, modules of programs, or other data. Examples of the computer storage medium include, but are not limited to, the phase change random access memory (PRAM), the static random access memory (SRAM), the dynamic random access memory (DRAM), other types of random access memory (RAM), the read-only memory (ROM), the electrically erasable programmable read-only memory (EEPROM), the flash memory or other memory technologies, the compact disc read-only memory (CD-ROM), the digital multi-function optical disk (DVD) or other optical storage, the magnetic cartridge tape, the magnetic disk storage, or other magnetic storage devices or any other non-transmission medium. The computer storage medium may be used for storing information that may be accessed by the computing device.

Since the embodiments of the apparatuses substantially corresponds to the embodiments of the methods, and the related contents may refer to the description of the embodiments of the methods. The apparatus embodiments described above are only schematic. The units explained as separate components may be or may not be physically separated, and the components displayed as units may be or may not be physical units, that is, they may be located in one place or may be distributed across multiple network units. A part or all of modules may be selected according to actual needs to achieve the purpose of the solutions in these embodiments. Those skilled in the art may understand and implement other embodiments without creative efforts.

The user information (including but not limited to user device information, user personal information, etc.) and data (including but not limited to data for analysis, data for storage, data for display, etc.) involved in the present disclosure are information and data that are authorized by the user or fully authorized by various parties, and collection, use, and processing of related data needs to comply with related laws and regulations and standards of related countries and regions, and are provided with corresponding operation portals for the user to select authorization or rejection.

It should be noted that the relationship terms used herein, such as "first", "second" and the like are only to distinguish one entity or operation from another entity or operation, but do not necessarily require or imply that there is any actual relationship or order between these entities or operations. The terms "include", "comprise", or any variants thereof are intended to cover a non-exclusive inclusion, such that processes, methods, articles, or devices, including a series of elements, include not only those elements that have been listed, but also other elements that are not specifically listed or the elements intrinsic to these processes, methods, articles, or devices. Without further limitations, elements limited by the wording "include(s) a/an..." or "comprise(s) a/an..." do not exclude additional identical elements in the processes, methods, articles or devices, including the listed elements.

The method and apparatus provided by the embodiments of the present disclosure are described in detail above, specific examples are applied herein to describe the principles and implementations of the present disclosure, and the description of the above embodiments is only used to help understand the method of the present disclosure and the core idea thereof; meanwhile, for those skilled in the art, according to the idea of the present disclosure, there will be changes in the specific implementations and application scope. In summary, the content of the present disclosure should not be construed as limiting the present disclosure.

## Claims

1. A data transmission method, performed by a wireless sending end which is communicatively connected to one or more wireless receiving ends, comprising:
obtaining a plurality of to-be-sent data packets, and performing encoding process on the plurality of data packets to obtain a plurality of error correction check packets, wherein the plurality of error correction check packets are for recovering the plurality of data packets;
selecting M error correction check packets from the plurality of error correction check packets, wherein the M is a positive integer and is determined based on packet loss information returned by the one or more wireless receiving ends in a previous time; and
sending the plurality of data packets and the M error correction check packets to the one or more wireless receiving ends, such that the one or more wireless receiving ends are caused to
determine, based on received data packets, packet loss information for the plurality of data packets in a transmission process,
return the determined packet loss information to the wireless sending end, and
recover, in a case of determining that there is a packet loss phenomenon, the plurality of data packets based on the received data packets and received error correction check packets.

2. The method of claim 1, wherein the one or more wireless receiving ends comprise at least two wireless receiving ends;
the wireless sending end establishes a broadcast channel and at least two unicast channels; each of the at least two unicast channel is used to communicate with one wireless receiving end; and
the wireless sending end sends, through the broadcast channel, the plurality of data packets and the M error correction check packets to the at least two wireless receiving ends, and separately receives, through the at least two unicast channels, the packet loss information returned by the at least two wireless receiving ends respectively.

3. The method of claim 2, wherein after sending, through the broadcast channel, the plurality of data packets and the M error correction check packets to the at least two wireless receiving ends, the method further comprises:
receiving one or more retransmission requests returned by one or more of the at least two wireless receiving ends, wherein the one or more retransmission requests carry one or more numbers of to-be-retransmitted error correction check packets;
determining a maximum number N from the one or more numbers carried in the one or more received retransmission requests;
selecting N error correction check packets from the plurality of error correction check packets as retransmission data; and
broadcasting the retransmission data through the broadcast channel, wherein the N selected error correction check packets are other error correction check packets than the M error correction check packets.

4. The method of claim 3, wherein the wireless sending end is configured with a first sending queue and a second sending queue;
the first sending queue is for sending the retransmission data, and the second sending queue is for sending other data than the retransmission data; and
a priority of the first sending queue is higher than a priority of the second sending queue.

5. The method of claim 1, wherein after sending the plurality of data packets and the M error correction check packets to the one or more wireless receiving ends, the method further comprises:
receiving the packet loss information returned by the one or more wireless receiving ends, and
determining, based on the received packet loss information, a number of to-be-sent error correction check packets in a next time.

6. The method of claim 1, wherein the one or more wireless receiving ends comprise at least two wireless receiving ends; the packet loss information comprises a packet loss rate per unit time; and determining the M based on the packet loss information returned by the one or more wireless receiving ends in the previous time, comprises:
determining, from received packet loss rates per unit time which are returned by the at least two wireless receiving ends in the previous time, a maximum packet loss rate; and
determining the M based on a number of the plurality of to-be-sent data packets and the maximum packet loss rate.

7. A data transmission method, performed by a wireless receiving end which is communicatively connected to a wireless sending end, comprising:
receiving a plurality of data packets and a plurality of error correction check packets sent by the wireless sending end;
determining packet loss information in a current data transmission process based on the received data packets;
returning the determined packet loss information to the wireless sending end, so that the wireless sending end determines, based on the packet loss information, a number of to-be-sent error correction check packets in a next data transmission process; and
recovering, in a case of determining that there is a packet loss phenomenon, the plurality of data packets sent by the wireless sending end based on the received data packets and the received error correction check packets.

8. The method of claim 7, wherein the recovering the plurality of data packets sent by the wireless sending end based on the received data packets and the received error correction check packets, comprises:
directly recovering, if determining that the plurality of data packets sent by the wireless sending end can be recovered through the received error correction check packets, the plurality of data packets sent by the wireless sending end through the received error correction check packets; and
sending, if determining that the plurality of data packets sent by the wireless sending end cannot be recovered through the received error correction check packets, a retransmission request to the wireless sending end, wherein the retransmission request carries a number of to-be-retransmitted error correction check packets.

9. The method of claim 7, wherein after sending the retransmission request to the wireless sending end, the method further comprises:
packing, after receiving the error correction check packets retransmitted by the wireless sending end, the retransmitted error correction check packets, wherein a packing priority of the retransmitted error correction check packets is higher than a packing priority of other data packet.

10. A wireless sending device, wherein the wireless sending device can implement the data transmission method of any one of claims 1 to 6.

11. A wireless receiving device, wherein the wireless receiving device can implement the data transmission method of any one of claims 7 to 9.

12. A wireless transmission system, comprising the wireless sending device of claim 10 and one or more wireless receiving devices of claim 11.

13. A computer program product, comprising a computer program, wherein the computer program, when being executed, implements the method of any one of claims 1 to 6 and/or 7 to 9.

14. A computer storage medium storing computer instructions, wherein the computer instructions, when being executed, implement the method of any one of claims 1 to 6 and/or 7 to 9.
